# EUROPEAN PATENT APPLICATION

(11) **EP 4 539 323 A1**
(43) Date of publication of application: **16.04.2025**
(21) Application number: 23202297.0
(22) Date of filing: 09.10.2023
(51) Int. Cl.: H02M 3/335, H05B 45/382, H05B 45/385, H02M 1/00

(54) **RESONANT HYBRID FLYBACK CONVERTER, LED CONVERTER COMPRISING THE LATTER, AND CORRESPONDING CONTROL METHOD**

(71) Applicant: Tridonic GmbH & Co KG, 6851 Dornbirn (AT)
(72) Inventor: Schneider, Miguel Philipp, 6851 Dornbirn (AT)
(74) Representative: Rupp, Christian

(57) **Abstract**

A resonant hybrid flyback converter (10) with output terminals for supplying a LED load (16) is provided. Said resonant hybrid flyback converter (10) comprises a feedback-control unit (11), a half bridge arrangement (12) comprising a high side switch (12a) and a low side switch (12b), and a SELV barrier (13). In this context, the feedback-control unit (11) is arranged for regulating the output current of the resonant hybrid flyback converter (10) by varying an on-time of the high side switch (12a). The resonant hybrid flyback converter (10) further comprises a feedback signal path (14) indicating the output current on the secondary side (13b) of the SELV barrier (13) of the resonant hybrid flyback converter (10), the feedback signal comprising a current sensing transformer on the secondary side (13b) of the SELV barrier (13) and leading to the feedback-control unit (11) arranged on the primary side (13a) of the SELV barrier (13).

## Description

The invention relates to a resonant hybrid flyback converter with output terminals for supplying a LED load, a LED converter comprising such a resonant hybrid flyback converter, and a method for controlling the output current of a resonant hybrid flyback converter.

Generally, in times of an increasing number of LED lighting applications, there is a growing need of a resonant hybrid flyback converter with output terminals for supplying a LED load, a LED converter comprising such a resonant hybrid flyback converter, and a method for controlling the output current of a resonant hybrid flyback converter in order to supply the corresponding LEDs of such applications with power in a particularly accurate, reliable, and efficient manner.

Accordingly, there is the object to provide a resonant hybrid flyback converter with output terminals for supplying a LED load, a LED converter comprising such a resonant hybrid flyback converter, and a method for controlling the output current of a resonant hybrid flyback converter, thereby ensuring a particularly high accuracy, reliability, and efficiency in the context of supplying a corresponding LED load with power.

This object is solved by the features of the first independent claim for a resonant hybrid flyback converter with output terminals for supplying a LED load, the features of the second independent claim for a LED converter comprising such a resonant hybrid flyback converter, and the features of the third independent claim for a method for controlling the output current of a resonant hybrid flyback converter.

According to a first aspect of the invention, a resonant hybrid flyback converter with output terminals for supplying a LED load is provided. Said resonant converter hybrid flyback comprises a feedback-control unit, a half bridge arrangement comprising a high side switch and a low side switch, and a SELV barrier. In this context, the feedback-control unit is arranged for regulating the output current of the resonant hybrid flyback converter by varying an on-time of the high side switch. The resonant hybrid flyback converter furthermore comprises a feedback signal path indicating the output current on the secondary side of the SELV barrier of the resonant hybrid flyback converter, the feedback signal comprising a current sensing transformer on the secondary side of the SELV barrier and leading to the feedback-control unit arranged on the primary side of the SELV barrier. Advantageously, a particularly high accuracy, reliability, and efficiency can be ensured in the context of supplying a corresponding LED load with power.

According to an implementation form of the first aspect of the invention, the feedback-control unit comprises an analogue regulator comparing the feedback signal with a nominal value and issuing a control signal as a function of the difference of the feedback signal and the nominal value, and an integrated circuitry, such as an ASIC or microcontroller, being supplied with the control signal at an input pin and issuing a high side switch control switching on and off the high side switch. Advantageously, for instance, efficiency can further be increased.

According to a further implementation form of the first aspect of the invention, the analogue regulator comprises an operational amplifier supplied with the nominal value and the feedback signal, and one of a PI, P or PID unit supplied with an output signal and issuing the control signal. Advantageously, for example, inefficiencies can further be reduced.

According to a second aspect of the invention, a LED converter is provided. Said LED converter comprises a resonant hybrid flyback converter according to the first aspect of the invention or any of its implementation forms, respectively, a PFC circuitry supplying the resonant hybrid flyback converter with a DC voltage, and a LED load supplied by said resonant hybrid flyback converter. Advantageously, a particularly high accuracy, reliability, and efficiency can be ensured in the context of supplying the LED load with power.

According to a third aspect of the invention, a method for controlling the output current of a resonant hybrid flyback converter is provided. Said method comprises a feedback-control unit, a half bridge arrangement comprising a high side switch and a low side switch, and a SELV barrier, wherein the feedback-control unit regulates the output current of the resonant hybrid flyback converter by varying an on-time of the high side switch, and a feedback signal path indicates the output current on the secondary side of the SELV barrier of the resonant hybrid flyback converter, the feedback signal comprising a current sensing transformer on the secondary side of the SELV barrier and leading to the feedback-control unit arranged on the primary side of the SELV barrier. Advantageously, a particularly high accuracy, reliability, and efficiency can be ensured in the context of supplying a corresponding LED load with power.

According to an implementation form of the third aspect of the invention, an analogue regulator compares the feedback signal with a nominal value and issues a control signal as a function of the difference of the feedback signal and the nominal value, and an integrated circuitry, such as an ASIC or microcontroller, is supplied with the control signal at an input pin and issues a high side switch control switching on and off the high side switch. Advantageously, for instance, efficiency can further be increased.

Exemplary embodiments of the invention are now further explained with respect to the drawings by way of example only, and not for limitation. In the drawings:
- Fig. 1: shows an exemplary embodiment of the first aspect of the invention in combination with an exemplary embodiment of a major part of the second aspect of the invention; and
- Fig. 2: shows a flow chart of an exemplary embodiment of the third aspect of the invention.

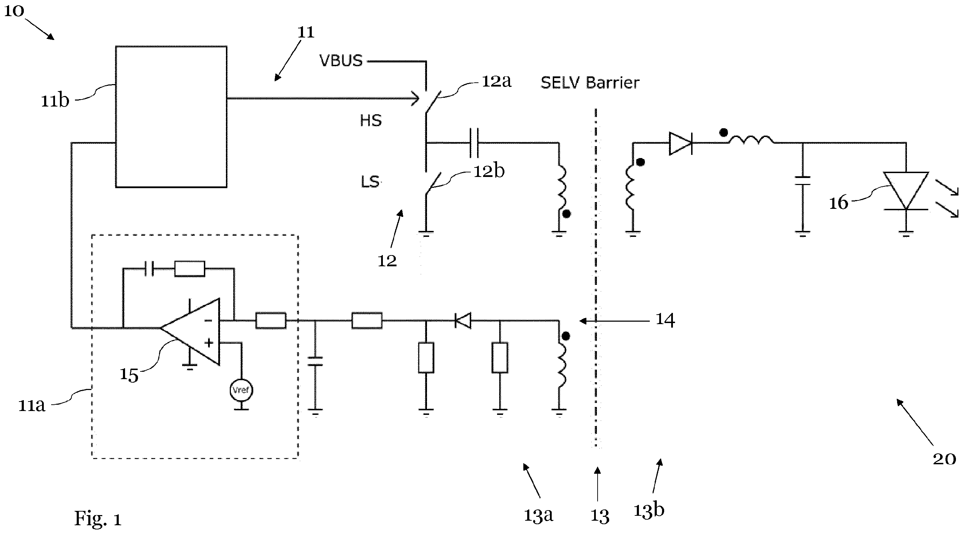

With respect to Fig. 1, an exemplary embodiment of a resonant hybrid flyback converter 10 with output terminals for supplying a LED load 16 is depicted.

In accordance with said Fig. 1, said resonant hybrid flyback converter 10 comprises a feedback-control unit 11, a half bridge arrangement 12 comprising a high side switch 12a, especially a high side field-effect transistor, and a low side switch 12b, especially a low side field-effect transistor, and a SELV barrier 13.

In this context, the feedback-control unit 11 is arranged for regulating the output current of the resonant hybrid flyback converter 10 by varying an on-time of the high side switch 12a.

Furthermore, the resonant hybrid flyback converter 10 comprises a feedback signal path 14 indicating the output current on the secondary side 13b of the SELV barrier 13 of the resonant hybrid flyback converter 10, the feedback signal comprising a current sensing transformer on the secondary side 13b of the SELV barrier 13 and leading to the feedback-control unit 11 arranged on the primary side 13a of the SELV barrier 13.

As it can further be seen from Fig. 1, the feedback-control unit 11 exemplarily comprises an analogue regulator 11a comparing the feedback signal with a nominal value and issuing a control signal as a function of the difference of the feedback signal and the nominal value, and an integrated circuitry 11b, such as an ASIC or microcontroller, being supplied with the control signal at an input pin and issuing a high side switch control switching on and off the high side switch 12a.

With respect to the analogue regulator 11a, it is noted that the analogue regulator 11a exemplarily comprises an operational amplifier 15 supplied with the nominal value and the feedback signal, and one of a PI, P or PID unit supplied with an output signal and issuing the control signal.

In this exemplary case, as it can be seen from Fig. 1, a PI unit is used. Accordingly, the analogue regulator 11a may especially be understood as a PI regulator in this exemplary case according to Fig. 1.

For the sake of completeness, it is noted that Fig. 1 illustrate at least a major part of a LED converter 20 comprising the resonant hybrid flyback converter 10, a PFC circuitry supplying the resonant hybrid flyback converter 10 with a DC voltage, and the LED load 16 supplied by said resonant hybrid flyback converter 10. In this context, said PFC circuitry is not explicitly shown.

With respect to the above-mentioned PFC circuitry, it is noted that said PFC circuitry may especially comprise or be a boost PFC circuitry.

In addition to all the explanations above, the corresponding functioning of the resonant hybrid flyback converter 10 or the LED converter 20, respectively, is summarized in the following.

Firstly, it is noted that the feedback-control unit 11, especially the integrated circuitry 11b, is used for LED current control with respect to the LED load 16.

Furthermore, the corresponding secondary side current is sensed exemplarily by a current sense transformer. Then, the correspondingly gained information is handed over to the primary side and an analog LED current regulation is done with aid of the feedback-control unit 11, especially with the aid of the analogue regulator 11a.

Moreover, the output of said regulation is the feedback signal which is fed into the feedback-control unit 11, especially the integrated circuitry 11b.

In addition to this, the analog regulation is exemplarily built up by the operational amplifier 15 and can be executed as P, PI or PID controller, exemplarily PI controller as already mentioned above.

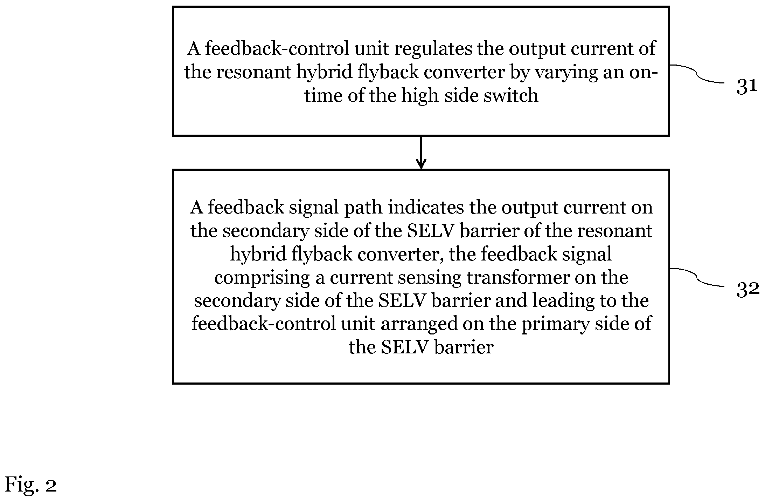

Finally, Fig. 2 shows a flow chart of an exemplary embodiment of a method for controlling the output current of a resonant hybrid flyback converter, comprising a feedback-control unit, a half bridge arrangement comprising a high side switch and a low side switch, and a SELV barrier.

As it can be seen from said Fig. 2, in accordance with a first step 31, the feedback-control unit regulates the output current of the resonant hybrid flyback converter by varying an on-time of the high side switch.

In addition to this, in accordance with a second step 32, a feedback signal path indicates the output current on the secondary side of the SELV barrier of the resonant hybrid flyback converter, the feedback signal comprising a current sensing transformer on the secondary side of the SELV barrier and leading to the feedback-control unit arranged on the primary side of the SELV barrier.

It is noted that it might be particularly advantageous if an analogue regulator compares the feedback signal with a nominal value and issues a control signal as a function of the difference of the feedback signal and the nominal value, and an integrated circuitry, such as an ASIC or microcontroller, is supplied with the control signal at an input pin and issues a high side switch control switching on and off the high side switch.

It is further noted that it might be particularly advantageous if the method uses the resonant hybrid flyback converter 10 according to Fig. 1.

Accordingly, the resonant hybrid flyback converter or the corresponding elements thereof, respectively, mentioned in the context of the method may especially be understood as the respective elements of Fig. 1.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. Resonant hybrid flyback converter (10) with output terminals for supplying a LED load (16),
comprising:
a feedback-control unit (11),
a half bridge arrangement (12) comprising a high side switch (12a) and a low side switch (12b), and
a SELV barrier (13),
wherein the feedback-control unit (11) is arranged for regulating the output current of the resonant hybrid flyback converter (10) by varying an on-time of the high side switch (12a),
furthermore comprising:
a feedback signal path (14) indicating the output current on the secondary side of the SELV barrier (13) of the resonant hybrid flyback converter (10), the feedback signal comprising a current sensing transformer on the secondary side (13b) of the SELV barrier (13) and leading to the feedback-control unit (11) arranged on the primary side (13a) of the SELV barrier (13).

2. The resonant hybrid flyback converter (10) of claim 1, wherein the feedback-control unit (11) comprises:
an analogue regulator (11a) comparing the feedback signal with a nominal value and issuing a control signal as a function of the difference of the feedback signal and the nominal value, and
an integrated circuitry (11b), such as an ASIC or microcontroller, being supplied with the control signal at an input pin and issuing a high side switch control switching on and off the high side switch (12a).

3. The resonant hybrid flyback converter (10) of claim 2, wherein the analogue regulator (11a) comprises an operational amplifier (15) supplied with the nominal value and the feedback signal, and one of a PI, P or PID unit supplied with an output signal and issuing the control signal.

4. A LED converter (20) comprising:
a resonant hybrid flyback converter (10) according to any of the preceding claims,
a PFC circuitry supplying the resonant hybrid flyback converter (10) with a DC voltage, and
a LED load (16) supplied by said resonant hybrid flyback converter (10).

5. A method for controlling the output current of a resonant hybrid flyback converter (10),
comprising:
a feedback-control unit (11),
a half bridge arrangement (12) comprising a high side switch (12a) and a low side switch (12b), and
a SELV barrier (13),
wherein the feedback-control unit (11) regulates (31) the output current of the resonant hybrid flyback converter (10) by varying an on-time of the high side switch (12a), and a feedback signal path (14) indicates (32) the output current on the secondary side (13b) of the SELV barrier (13) of the resonant hybrid flyback converter (10), the feedback signal comprising a current sensing transformer on the secondary side (13b) of the SELV barrier (13) and leading to the feedback-control unit (11) arranged on the primary side (13a) of the SELV barrier (13).

6. The method of claim 5,
wherein an analogue regulator (11a) compares the feedback signal with a nominal value and issues a control signal as a function of the difference of the feedback signal and the nominal value, and
an integrated circuitry (11b), such as an ASIC or microcontroller, is supplied with the control signal at an input pin and issues a high side switch control switching on and off the high side switch (12a).
